# EUROPEAN PATENT SPECIFICATION

(11) **EP 4 102 274 B1**
(45) Date of publication and mention of the grant of the patent: **05.11.2025**
(21) Application number: 20921426.1
(22) Date of filing: 15.09.2020
(51) Int. Cl.: G02B 6/44

(54) **OPTICAL CABLE FIBER DISTRIBUTION DEVICE**
FASERVERTEILER FÜR OPTISCHES KABEL
DISPOSITIF DE DISTRIBUTION DE CÂBLE À FIBRE OPTIQUE

(30) Priority: 28.02.2020 CN 202010131112
(43) Date of publication of application: 14.12.2022
(73) Proprietor: Huawei Technologies Co., Ltd., Shenzhen, Guangdong 518129, (CN)
(72) Inventor: HE, Boyong, Shenzhen, Guangdong 518129 (CN); LI, Weibo, Shenzhen, Guangdong 518129 (CN); XIONG, Wei, Shenzhen, Guangdong 518129 (CN)
(74) Representative: Maiwald GmbH
(86) International application number: PCT/CN2020/115386
(87) International publication number: WO 2021/169249

(56) References cited:
- CN-A- 101 796 444
- CN-A- 101 802 672
- CN-A- 102 067 001
- CN-A- 102 947 740
- CN-A- 111 352 196
- CN-U- 202 486 380
- CN-U- 202 886 689
- US-A1- 2009 074 370
- US-A1- 2015 309 276

## Description

### TECHNICAL FIELD

This application relates to the field of optical communications device technologies, and in particular, to an optical cable fiber distribution apparatus.

### BACKGROUND

As an important structure of an optical transmission device, a fiber access terminal is usually mounted on a wall of a staircase of a community, in a green belt of a community, or in another place. The fiber access terminal is usually connected to a main optical cable to implement a fiber distribution function, and is connected to an indoor optical interface through several distribution optical cables, to finally transmit optical signals to each user.

An optical cable fiber distribution apparatus usually includes a fiber access terminal, a fiber spool, and an optical cable. The three components are three independent components, and need to be assembled on site. A specific assembly process is as follows: lay optical cables, install the fiber access terminal and the fiber spool, plug the routed optical cables in the fiber access terminal, and finally, coil a redundant optical cable on the fiber spool.

The fiber access terminal, the fiber spool, and the optical cable are independent of each other and need to be assembled on the site. In addition, assembly is complex, construction time is long, and assembly efficiency is low.
United States patent application US 2009/0074370 A1 discloses a fiber optic enclosure assembly including a housing having an interior region and a bearing mount disposed in the interior region of the housing. A cable spool is connectedly engaged with the bearing mount such that the cable spool selectively rotates within the housing and a termination module is disposed on the cable spool so that the termination module rotates in unison with the cable spool.

### SUMMARY

Embodiments of this application provide an optical cable fiber distribution apparatus, to resolve technical problems of low cable take-up and pay-off efficiency, poor cable take-up effect, and low assembly efficiency of an optical cable fiber distribution apparatus in the prior art.

To achieve the foregoing objective, the following technical solutions are used in the embodiments of this application.

This application provides an optical cable fiber distribution apparatus, including a fiber access terminal, a cable take-up and pay-off structure, and a connection structure, where the cable take-up and pay-off structure is configured to take up and pay-off an optical cable connected to the fiber access terminal;
the cable take-up and pay-off structure includes:
a base with a storage cavity, where the storage cavity integrates with a surface of the base to form a storage cavity opening, and the base is disposed with a cable port connected to the storage cavity; and
a rotary tray, configured to coil the optical cable, where the rotary tray is installed in the storage cavity, the fiber access terminal is disposed on a side of the storage cavity opening, the rotary tray is relatively fixed to the fiber access terminal, and the rotary tray and the fiber access terminal can rotate synchronously relative to the base; and
the connection structure includes:
   a first connector, disposed on the fiber access terminal; and
   a second connector, disposed on the base and detachably connected to the first connector.

According to the claimed invention, the rotary tray is installed in the storage cavity of the base. The rotary tray can rotate relative to the base, and the rotary tray is relatively fixed to the fiber access terminal. In other words, after one end of the optical cable wound around the rotary tray is plugged in the fiber access terminal, and if the optical cable passing through the cable port is pulled out, the fiber access terminal and the rotary tray rotate synchronously along a first rotation direction, to implement cable layout. How many optical cables are pulled out depends on how many optical cables are required. Compared with that in the prior art, there is no need to manually coil a redundant optical cable. In addition, when the redundant optical cable that is pulled out needs to be taken-up, because the fiber access terminal is disposed on the side of the storage cavity opening, the fiber access terminal may be rotated in a second rotation direction opposite to the first rotation direction. In this way, the cable is taken-up, and cable take-up and pay-off efficiency is significantly improved. The base is connected to the fiber access terminal, and the optical cable may be wound around the rotary tray. During specific construction, there is no need to assemble the optical cable, the fiber access terminal, and the rotary tray on site. This improves construction efficiency.

In addition, because the rotary tray for coiling the optical cable is disposed in the storage cavity, when a cable is taken-up, the optical cable is limited by a wall surface of the storage cavity, to avoid a case in which the optical cable coiled on the rotary tray is loose, and improve cable take-up. The optical cable is hidden in the storage cavity, and this protects the optical cable and improves an appearance.

In addition, the base is detachably connected to the fiber access terminal by using the first connector and the second connector that collaborate with each other. When the optical cable does not need to be pulled out, the fiber access terminal is connected to the base by using the first connector and the second connector, to ensure integrity of an entire structure. When the optical cable needs to be pulled out, the first connector and the second connector are disassembled to separate the fiber access terminal from the base, so that the fiber access terminal and the rotary tray can rotate synchronously relative to the base.

In a possible implementation, one of the first connector and the second connector is a card fastener, and the other is a card slot. The fiber access terminal is connected to the base through a clamping structure, which is easy to operate. In addition, the clamping structure formed by the card fastener and the card slot is simple in structure, and easy to implement.

In a possible implementation, the connection structure is a plug structure. The first connector includes a connection pin and a first jack disposed on the fiber access terminal. The second connector includes a second jack disposed on the base. The connection pin penetrates into the first jack and the second jack, and the connection pin is in clearance fit with the first jack and the second jack.

The rotary tray and the fiber access terminal can synchronously move relative to the base, between a first position and a second position. Moving directions of the rotary tray and the fiber access terminal are consistent with a direction of a rotation axis of the rotary tray. When the rotary tray and the fiber access terminal move to the first position, the rotary tray is located in the storage cavity. When the rotary tray and the fiber access terminal move to the second position, the rotary tray is located outside the storage cavity. The optical cable wound around the rotary tray is disposed in the storage cavity. Therefore, an operation is difficult when the optical cable is installed or maintained. However, the rotary tray and the fiber access terminal are moved synchronously relative to the base, between the first position and the second position. When the optical cable needs to be wound around the rotary tray or the optical cable needs to be maintained, the rotary tray may be moved to the second position, so that the rotary tray is moved from inside of the storage cavity to outside of the storage cavity. In this way, the operation is convenient, and use performance of the entire optical cable fiber distribution apparatus is improved.

In a possible implementation, the rotary tray is connected to the base by using a scalable structure. When the scalable structure is in an elongation state, the rotary tray and the fiber access terminal are in the second position. When the scalable structure is in a contraction state, the rotary tray and the fiber access terminal are in the first position. For example, a telescopic cylinder or a telescopic oil cylinder is used. In other words, the telescopic cylinder and the telescopic oil cylinder are used to drive the rotary tray and the fiber access terminal to move in the first position and the second position.

In a possible implementation, the rotary tray is connected to the base by using a linear motor. In other words, the linear motor drives the rotary tray and the fiber access terminal to move in the first position and the second position.

In a possible implementation, a stationary shaft is disposed in the storage cavity. The stationary shaft is relatively fixed to the base. An axis of the stationary shaft is collinear with the rotation axis of the rotary tray. The rotary tray has a jack. The rotary tray is sleeved outside the stationary shaft through the jack. The rotary tray and the fiber access terminal can rotate around the axis of the stationary shaft, and can slide along the axis of the stationary shaft, between the first position and the second position. When the rotary tray and the fiber access terminal slide to the first position, the rotary tray presses against a bottom of the storage cavity. The cable take-up and pay-off structure further includes a stop block, where the stop block is configured to: when the rotary tray and the fiber access terminal slide to the second position, prevent the rotary tray from being detached from the stationary shaft and prevent the rotary tray from moving in a direction close to the first position. The rotary tray slides and disposed on the stationary shaft. During specific implementation, a pulling force is used to drive the rotary tray and the fiber access terminal to move relative to the stationary shaft. The stop block is used to prevent the rotary tray from sliding out of the stationary shaft and prevent the rotary tray from sliding toward the second position. When the rotary tray slides to the first position, the rotary tray presses against the base to prevent the rotary tray and the fiber access terminal from continuing to slide in a direction away from the second position.

In a possible implementation, the stop block includes: a first boss, where the first boss is disposed on an outer wall surface of the stationary shaft and is close to one end of the storage cavity opening, and the first boss is disposed along a circumferential direction of the stationary shaft; and an extension part that is extending in the direction of the stationary shaft and that is disposed on a wall surface of the jack, where the extension part is disposed along a circumferential direction of the rotary tray, the extension part is elastic, the extension part is close to the bottom of the storage cavity, and the extension part is disposed with a card slot for clamping the first boss, a notch of the card slot faces the stationary shaft; and when the first boss is clamped into the card slot, the rotary tray can be prevented from being detached from the stationary shaft and the rotary tray can be prevented from moving in the direction close to the first position. The first boss and the card slot collaborate to limit a position of the rotary tray. The stop block has a simple structure and is easy to implement.

In a possible implementation, the cable take-up and pay-off structure further includes a locking member, where the locking member can switch between a locked state and an unlocked state. When the locking member is in the locked state, the rotary tray and the fiber access terminal that are located in the first position can be prevented from moving toward the second position. When the locking member is in the unlocked state, the rotary tray and the fiber access terminal that are located in the first position can be allowed to move toward the second position. When the base is detachably connected to the fiber access terminal by using the connection structure, if the fiber access terminal is separated from the base, the locking member is disposed to prevent the rotary tray from sliding from the first position to the second position. In this way, the optical cable fiber distribution apparatus may select, based on usage, that the rotary tray rotates at the first position, or the second position.

In a possible implementation, the locking member includes: a second boss, where the second boss is disposed on the outer wall surface of the stationary shaft and is close to one end of the storage cavity opening, the second boss is disposed at intervals along the circumferential direction of the stationary shaft, and a groove is formed between every two adjacent second bosses; and a convex rib, where the convex rib is disposed on the wall surface of the jack, and the convex rib is arranged at intervals along the circumferential direction of the rotary tray. When the convex rib presses against the second boss, the locking member is in the locked state, to prevent the rotary tray from sliding along an axial direction of the stationary shaft, toward the second position. When the convex rib is opposite to the groove, the locking member is in the unlocked state, and the rotary tray can slide along the axial direction of the stationary shaft, toward the second position. The second boss arranged at intervals along the circumferential direction of the stationary shaft and the convex rib arranged at intervals along the circumferential direction of the rotary tray prevent the rotary tray from sliding from the first position to the second position, and further enable the rotary tray to rotate along the circumferential direction of the stationary shaft. The second boss and the convex rib are used as the locking member. The locking member has a simple structure and is easy to manufacture.

In a possible implementation, the convex rib extends to one end that is of the rotary tray and that is close to the bottom of the storage cavity. One end that is of the convex rib and that is close to the bottom of the storage cavity has an avoidance groove for the second boss to pass through. The avoidance groove is disposed along the circumferential direction of the rotary tray. If the rotary tray at the second position needs to rotate, the convex rib on the rotary tray interferes with the second boss. As a result, the rotary tray cannot rotate. However, if the avoidance groove is disposed on the convex rib, when the rotary tray rotates, the second boss can pass through the avoidance groove. In this way, the rotary tray can rotate.

In a possible implementation, the rotary tray includes a first baffle plate and a second baffle plate that are opposite to each other. The first baffle plate is connected to the second baffle plate by using a connection column. The jack is disposed on the connection column. The connection column is sleeved outside the stationary shaft through the jack. The connection column can rotate around the axis of the stationary shaft. The connection column can slide along the axial direction of the stationary shaft. During specific implementation, the optical cable may be wound around the connection column. The first baffle plate and the second baffle plate can limit a position of the optical cable, to prevent the optical cable wound around the connection column from falling off the connection column.

In a possible implementation, the optical cable fiber distribution apparatus further includes: the optical cable, where the optical cable is wound around the rotary tray, one end of the optical cable is connected to a plug-in end of the fiber access terminal to transmit an optical signal on the optical cable to the fiber access terminal, and the other end of the optical cable can pass through the cable port. Because the optical cable fiber distribution apparatus further includes an optical cable wound around the rotary tray, to integrate one structure of the optical cable, the fiber access terminal, and the cable take-up and pay-off structure. Therefore, the construction efficiency is further improved.

In a possible implementation, the fiber access terminal is disposed with a guide structure, and the guide structure is configured to guide the optical cable to connect to the plug-in end of the fiber access terminal. The guide structure is disposed to connect the optical cable to the plug-in end of the fiber access terminal.

In a possible implementation, the guide structure includes a guide groove. The guide groove is used as the guide structure. The guide structure is simple and is easy to implement.

### BRIEF DESCRIPTION OF DRAWINGS

FIG. 1 is a schematic structural diagram of an appearance of an optical cable fiber distribution apparatus according to an embodiment of this application;
FIG. 2 is a schematic structural diagram after a fiber access terminal and a cable take-up and pay-off structure in FIG. 1 are decomposed;
FIG. 3 is a schematic structural diagram after a fiber access terminal, a base, and the rotary tray in FIG. 1 are decomposed;
FIG. 4 is a schematic diagram of a connection relationship between a fiber access terminal, a rotary tray, and a base according to an embodiment of this application;
FIG. 5 is a schematic diagram of a structure of a card fastener according to an embodiment of this application;
FIG. 6 is a schematic diagram of a connection relationship between a card fastener, and a base according to an embodiment of this application;
FIG. 7 is a diagram of a state of a rotary tray that is in a first position, relative to a stationary shaft according to an embodiment of this application;
FIG. 8 is a top view of a stationary shaft according to an embodiment of this application;
FIG. 9 is a top view of a rotary tray according to an embodiment of this application;
FIG. 10 is a diagram of a state of a rotary tray that is in a first position and rotates relative to a stationary shaft according to an embodiment of this application;
FIG. 11 is a diagram of a state of a rotary tray that slides from a first position to a second position according to an embodiment of this application;
FIG. 12 is a diagram of a state of a rotary tray that is in a second position and rotates relative to a stationary shaft according to an embodiment of this application;
FIG. 13 is an enlarged view of a position A in FIG. 12;
FIG. 14 is a diagram of a state of a rotary tray that is in a first position according to an embodiment of this application;
FIG. 15 is a diagram of a state of a rotary tray that slides from a first position to a second position according to an embodiment of this application;
FIG. 16 is a top view of a base according to an embodiment of this application;
FIG. 17 is a schematic structural diagram of a guide structure on a fiber access terminal according to an embodiment of this application; and
FIG. 18 is a schematic diagram of a connection relationship between a fiber access terminal, and a rotary tray according to an embodiment of this application.

Reference numerals:
1-Cable take-up and pay-off structure; 101-Base; 102-Rotary tray; 1021-Convex rib; 1022-Extension part; 1023-Avoidance groove; 103-Storage cavity; 104-Stationary shaft; 1041-First boss; 1042-Groove; 105-Cable port; 106-Mounting hole; 107-Reinforcing rib; 2-Fiber access terminal; 201-Baffle plate; 202-Plug-in end; 3-Connection structure; 301-Second connector; 302-First connector; 303-Rotary shaft; 401-Connector; 402-Mounting column; 403-Insertion hole; 404-Nozzle cap; 501-Nut; 502-Bolt; 503-Socket; 601-First conduit; 602-Second conduit; 7-Connection pin; 801-First baffle plate; 802-Second baffle plate; and 803-Connection column.

### DESCRIPTION OF EMBODIMENTS

Embodiments of this application relate to an optical cable fiber distribution apparatus. The following describes the optical cable fiber distribution apparatus in detail with reference to the accompanying drawings.

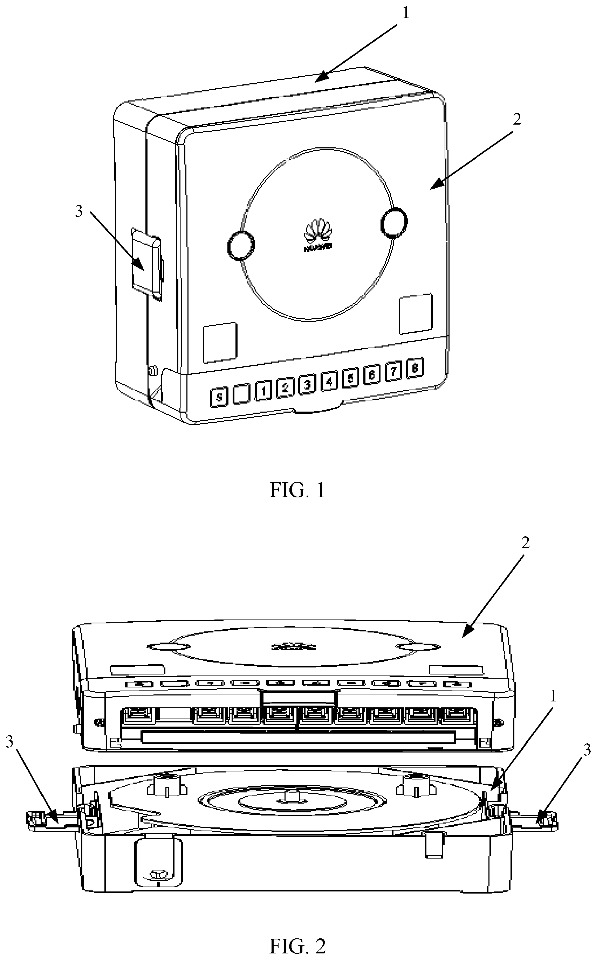

Refer to FIG. 1, FIG. 2, and FIG. 3. The optical cable fiber distribution apparatus includes a fiber access terminal 2, a cable take-up and pay-off structure 1, and a connection structure 3. The cable take-up and pay-off structure 1 is configured to take up and pay-off an optical cable connected to the fiber access terminal 2. The cable take-up and pay-off structure 1 includes a base 101 and a rotary tray 102. The base 101 has a storage cavity 103. The storage cavity 103 integrates with a surface of the base 101 to form a storage cavity opening. The base 101 is disposed with a cable port 105 connected to the storage cavity 103. The rotary tray 102 is configured to coil the optical cable. The rotary tray 102 is installed in the storage cavity 103. The fiber access terminal 2 is disposed on a side of the storage cavity opening. The rotary tray 102 and the fiber access terminal 2 are relatively fixed. The rotary tray 102 and the fiber access terminal 2 can rotate synchronously relative to the base 101. The connection structure 3 includes a first connector 302 disposed on the fiber access terminal 2, and a second connector 301 that is disposed on the base 101 and that is detachably connected to the first connector 302.

During specific implementation, the optical cable is wound around the rotary tray 102. One end of the optical cable is plugged in the fiber access terminal 2 to transmit an optical signal to the fiber access terminal 2. Then, the fiber access terminal 2 is used to allocate the optical signal.

Because the optical cable is wound around the rotary tray, an end (the end indicates one end that is of the optical cable and that is not plugged in the fiber access terminal) of the optical cable passing through the cable port 105 is pulled out, and the rotary tray 102 and the fiber access terminal 2 rotate relative to the base 101, along a first rotation direction, to implement cable layout. How many optical cables are pulled out depends on how many optical cables are required. Compared with that in the prior art, there is no need to manually coil a redundant optical cable that is pulled out. In addition, even if there are excessive optical cables that are pulled out, the fiber access terminal 2 and the rotary tray 102 rotate along a second rotation direction opposite to the first rotation direction, to take-up the cable. Therefore, the optical cable fiber distribution apparatus provided in the embodiments of this application can effectively improve construction efficiency of the cable take-up and pay-off.

The fiber access terminal 2 is relatively fixed to the rotary tray 102. In other words, the fiber access terminal 2 rotates synchronously with the rotating rotary tray 102, relative to the base 101. Therefore, a case in which the optical cable that is plugged in the fiber access terminal and that is wound around the rotary tray is twisted, and interferes with another structure is avoided.

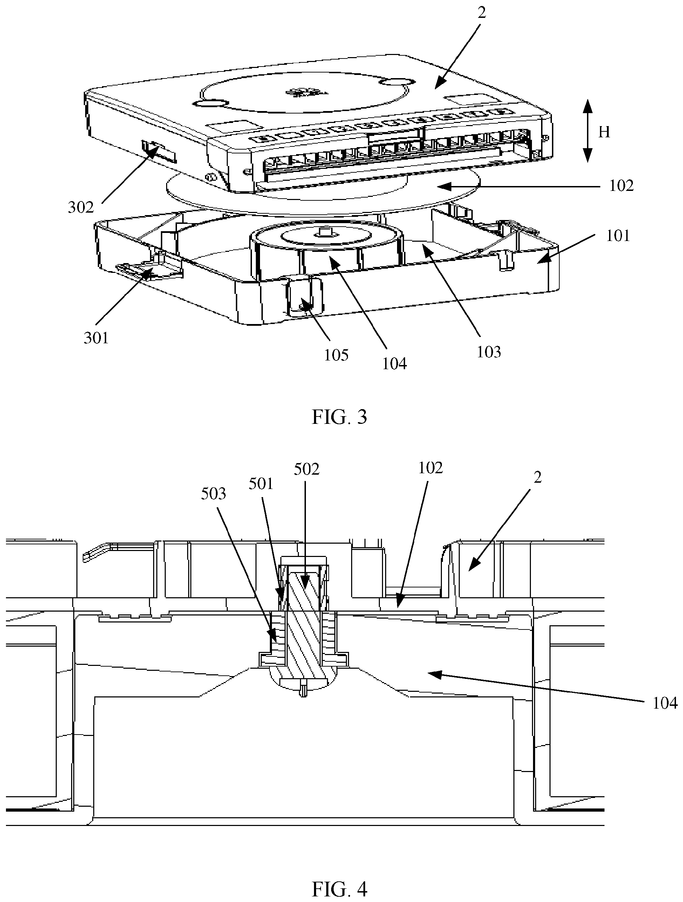

The rotary tray 102 is installed in the storage cavity 103. Therefore, when a cable is taken-up, the recycled optical cable is limited by a wall surface of the storage cavity 103, to avoid a case in which the optical cable coiled on the rotary tray is loose, and correspondingly improve cable take-up. In addition, the cable take-up and pay-off structure is usually disposed in a relatively harsh outdoor environment. Compared with a case in which an optical cable is exposed, hiding the optical cable in the storage cavity can protect the optical cable, and also improve an appearance of the cable take-up and pay-off structure. The rotary tray 102 is disposed in the storage cavity 103, and this further reduces a size of the cable take-up and pay-off structure in an H direction shown in FIG. 3.

In addition, the cable take-up and pay-off structure and the fiber access terminal can be assembled on a construction site based on different optical cable lengths and different fiber distribution capacities required on the construction site. Certainly, the cable take-up and pay-off structure and the fiber access terminal may also be assembled before being transported to the construction site, to improve construction efficiency.

During specific implementation, a height and a size of the storage cavity may be designed based on an optical cable length and a quantity of connectors of the optical cable (namely, a diameter of the optical cable), to ensure that the optical cable is located in the storage cavity.

There are a plurality of structures for implementing rotatable connection between the rotary tray 102 and the base 101. The following provides explanations and descriptions by using two embodiments.

Embodiment 1: Refer to FIG. 3. A stationary shaft 104 is disposed in the storage cavity 103. An axis of the stationary shaft 104 is collinear with a rotation axis of the rotary tray 102. The rotary tray 102 has a jack. The rotary tray 102 is sleeved outside the stationary shaft 104 through the jack, and can rotate around the axis of the stationary shaft 104. The rotary tray rotates and is sleeved outside the stationary shaft, so that the rotary tray and the fiber access terminal can rotate relative to the base.

During specific implementation, the stationary shaft 104 and the base 101 may be designed in an integrated manner, or the stationary shaft 104 may be fastened to the base 101 through a connector.

Embodiment 2: A wall surface of the storage cavity 103 has a rotary track disposed along a circumferential direction of the storage cavity 103. The rotary tray and the fiber access terminal may rotate relative to the base, along the rotary track.

In addition, the structure in which the rotary tray is rotationally connected to the base may also be another structure, which is not exhaustive herein.

Rotating connection structures in Embodiment 1 and Embodiment 2 are relatively simple. However, compared with that in Embodiment 2, the rotary tray is easily installed and removed in Embodiment 1. Therefore, the rotating connection structure in Embodiment 1 is preferably used in this application.

When the rotary tray 102 is sleeved outside the stationary shaft 104, and the fiber access terminal 2 is relatively fixed to the rotary tray 102, to prevent the fiber access terminal 2 and the rotary tray 102 from falling out from the stationary shaft 104 when rotating around the stationary shaft 104, a stop structure is further included. The stop structure is configured to prevent the fiber access terminal 2 and the rotary tray 102 from falling out from the stationary shaft 104. For example, refer to FIG. 4. The fiber access terminal 2 and the rotary tray 102 are connected to the stationary shaft 104 through a connector (including a bolt 502, a rivet, or another connector). The stationary shaft 104 is disposed with a through-hole for the connector to pass through. The fiber access terminal 2 has a nut 501 for locking the bolt 502. The connector is sleeved in a socket 503, and the socket 503 is sleeved in the through-hole and can rotate relative to the stationary shaft, so that the fiber access terminal 2 and the rotary tray 102 rotate relative to the stationary shaft 104. In this way, positions of the bolt and the nut can be limited to prevent the rotary tray from falling out from the stationary shaft 104. Certainly, the stop structure may alternatively be another structure, and any structure falls within the protection scope of this application.

Refer to FIG. 1 and FIG. 2. The base 101 is detachably connected to the fiber access terminal 2 by using the connection structure 3.

When the optical cable does not need to be pulled out, the fiber access terminal is connected to the base by using the connection structure, to ensure integrity of the entire structure. When the optical cable needs to be pulled out, the fiber access terminal is separated from the base by using the connection structure, so that the fiber access terminal and the rotary tray can rotate synchronously.

There are a plurality of connection structures 3 for implementing detachable connection between the fiber access terminal and the base. The following provides descriptions by using two embodiments.

Embodiment 1: The connection structure is a plug structure.

For example, the first connector includes a connection pin and a first jack disposed on the fiber access terminal. The second connector includes a second jack disposed on the base. The connection pin penetrates into the first jack and the second jack, and the connection pin is in clearance fit with the first jack and the second jack. In other words, when the fiber access terminal needs to be fixed to the base, the connection pin passes through the first jack and the second jack in sequence. When the fiber access terminal needs to be separated from the base, the connection pin is pulled out from the first jack and the second jack.

Embodiment 2: The connection structure is a clamping structure.

The clamping structure has a plurality of implementable structures. For example, refer to FIG. 3. The connection structure includes a card fastener of the first connector and a card slot of the second connector. The card fastener is disposed on the base 101, and the card slot is disposed on the fiber access terminal 2. For another example, the card fastener is disposed on the fiber access terminal, and the card slot is disposed on the base.

Because the clamping structure is easy to operate and can improve convenience of disassembling and assembling. Therefore, the clamping structure is preferably used in this application.

When the base is connected to the fiber access terminal by using the clamping structure, a working process of the cable take-up and pay-off structure is as follows: When the cable needs to be payed-off, the card fastener is removed from the card slot, the end of the optical cable passing through the cable port is pulled out, and the fiber access terminal 2 and the rotary tray 102 rotate synchronously relative to the base 101, along the first rotation direction, to pay-off the cable. When there are excessive optical cables that are pulled out, the fiber access terminal 2 rotates reversely along a reverse direction of the first rotation direction, and the rotary tray 102 rotates synchronously, to wind the excessive optical cables around the rotary tray.

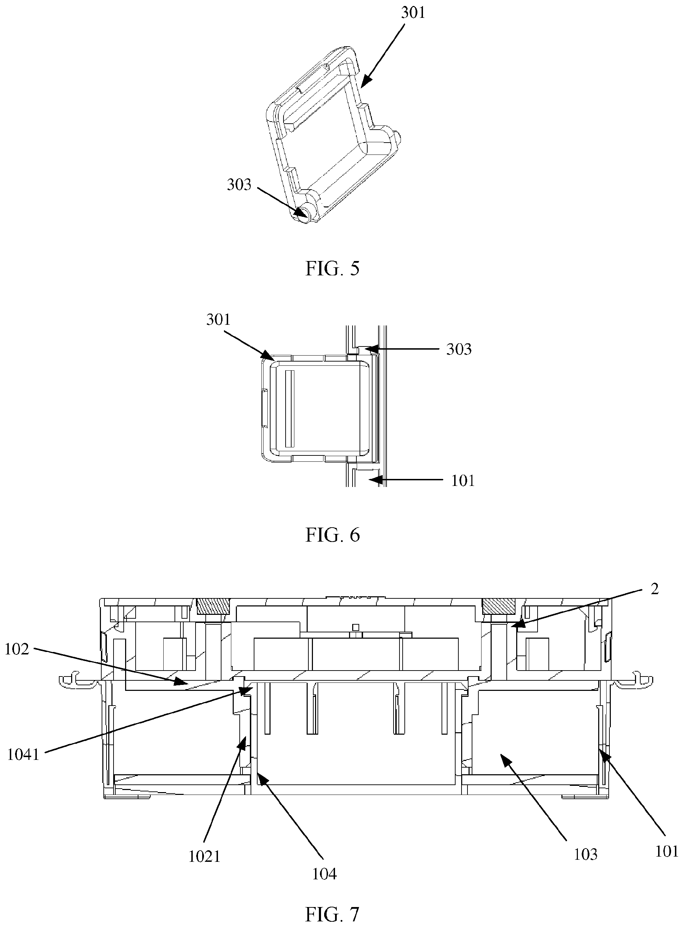

To improve use performance of the card fastener, refer to FIG. 5 and FIG. 6. The card fastener is rotationally connected to the base 101 by using a rotary shaft 303. In other words, the card fastener is connected to the base by using the rotary shaft 303. Compared with a connection manner in which the card fastener is connected to the base by using a structure made of a flexible material, the connection manner increases a service life of the card fastener.

Because the rotary tray 102 is disposed and rotates in the storage cavity 103 (as shown in FIG. 2), when an optical cable needs to be installed on the rotary tray 102 or an optical cable needs to be removed from the rotary tray 102, operation space is limited, and construction is inconvenient. Alternatively, when the optical cable wound around the rotary tray 102 needs to be maintained, construction is still inconvenient.

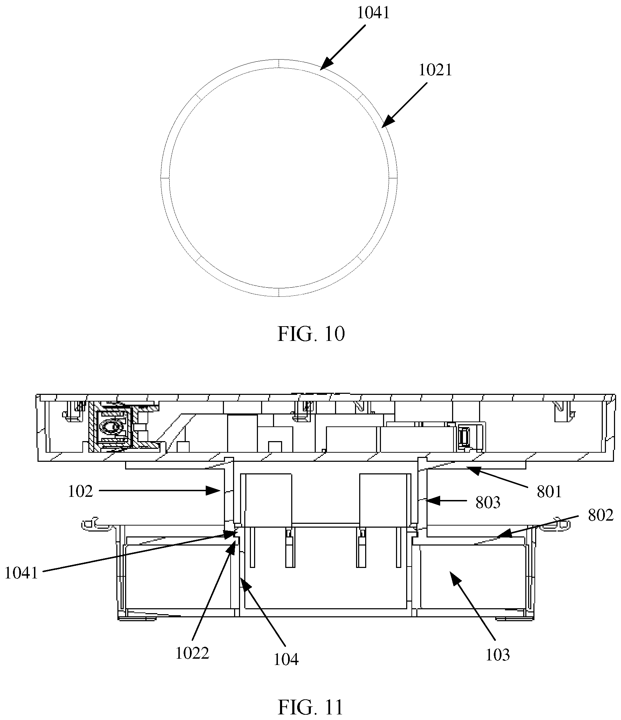

To improve construction convenience, refer to FIG. 7 and FIG. 11. The rotary tray 102 and the fiber access terminal 2 can synchronously move relative to the base 101, between a first position and a second position. Moving directions of the rotary tray 102 and the fiber access terminal 2 are consistent with a direction of the rotation axis of the rotary tray 102. Refer to FIG. 7. When the rotary tray 102 and the fiber access terminal 2 are moved to the first position, the rotary tray 102 is located in the storage cavity 103. Refer to FIG. 11. When the rotary tray 102 and the fiber access terminal 2 are moved to the second position, the rotary tray 102 is located outside the storage cavity 103.

In other words, the rotary tray 102 and the fiber access terminal 2 may move between the first position and the second position. When the rotary tray 102 moves to the second location, the rotary tray 102 is located outside the storage cavity 103. In this way, operations such as installation, removing, or maintenance of the optical cable can be conveniently performed, to improve use performance of the cable take-up and pay-off structure.

There are a plurality of structures in which the rotary tray 102 and the fiber access terminal 2 synchronously move relative to the base 101, between the first position and the second position. The following provides description by using two embodiments.

Embodiment 1: The rotary tray 102 is connected to the base 101 by using a scalable structure. When the scalable structure is in an elongation state, the rotary tray and the fiber access terminal are in the second position. When the scalable structure is in a contraction state, the rotary tray and the fiber access terminal are in the first position. In other words, the scalable structure drives the rotary tray and the fiber access terminal to move synchronously between the first position and the second position.

The scalable structure may be implemented by using a telescopic cylinder or a telescopic oil cylinder. The telescopic cylinder drives the rotary tray and the fiber access terminal to move between the first position and the second position. Specifically, a stroke of the telescopic cylinder or the telescopic oil cylinder is controlled to ensure that the rotary tray and the fiber access terminal move between the first position and the second position.

In addition, a linear motor may also be used to drive the rotary tray and the fiber access terminal to move between the first position and the second position.

Embodiment 2: The rotary tray 102 can slide between the first position and the second position, along the axis of the stationary shaft 104. To ensure that the rotary tray can slide between the first position and the second position, when the rotary tray and the fiber access terminal slide to the first position, the rotary tray 102 presses against a bottom of the storage cavity 103. The cable take-up and pay-off structure further includes a stop block. The stop block is configured to: when the rotary tray 102 and the fiber access terminal 2 slide to the second position, prevent the rotary tray 102 from being detached from the stationary shaft 104 and prevent the rotary tray 102 from moving in a direction close to the first position.

During specific implementation, a pulling force is used to the rotary tray and the fiber access terminal, so that the rotary tray 102 can slide along the axial direction of the stationary shaft 104. When the rotary tray slides from the first position to the second position, the stop block is used to limit the rotary tray 102 to be in the second position, to prevent the rotary tray 102 from being detached from the stationary shaft or moving toward the first position. When the rotary tray slides from the second position toward the first position, the rotary tray 102 comes in contact with the bottom of the storage cavity 103, to prevent the rotary tray 102 from continuing to move.

The stop block has a plurality of implementable structures. The following provides explanations and descriptions by using three embodiments.

Embodiment 1: Refer to FIG. 11. A first boss 1041 is disposed on an outer wall surface of the stationary shaft 104 and is close to one end of the storage cavity opening, and the first boss 1041 is disposed along the circumferential direction of the stationary shaft 104. The wall surface of the jack is provided with an extension part 1022 extending toward a direction of the stationary shaft 104. The extension part 1022 is disposed along the circumferential direction of the rotary tray 102. The extension part 1022 is elastic. The extension part 1022 is close to the bottom of the storage cavity. The extension part 1022 is disposed with a card slot for clamping the first boss 1041. A slot opening of the card slot faces the stationary shaft. When the first boss 1041 is clamped into the card slot, the rotary tray 102 can be prevented from being detached from the stationary shaft 104 and the rotary tray 102 can be prevented from moving in the direction close to the first position.

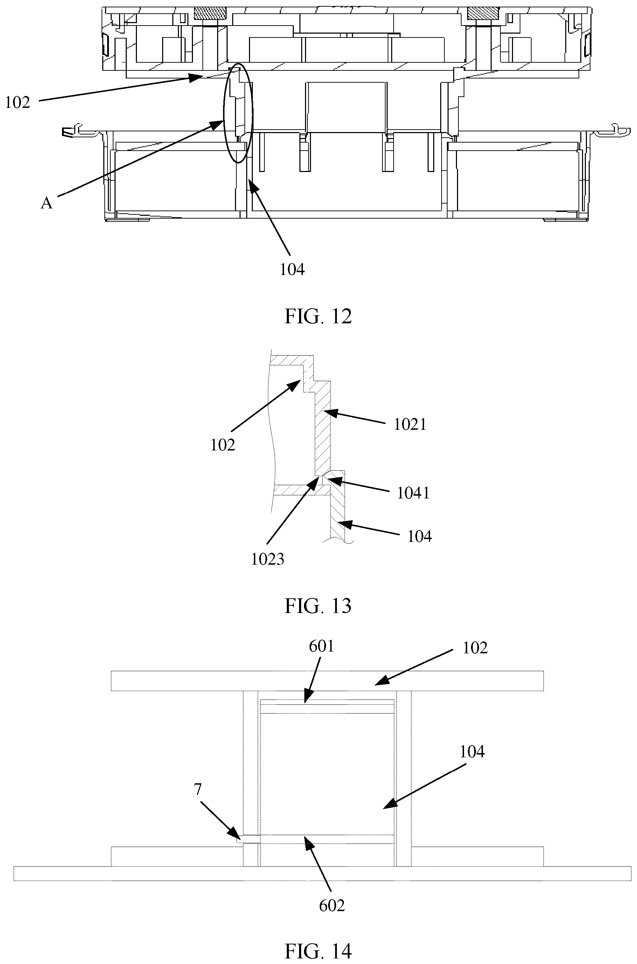

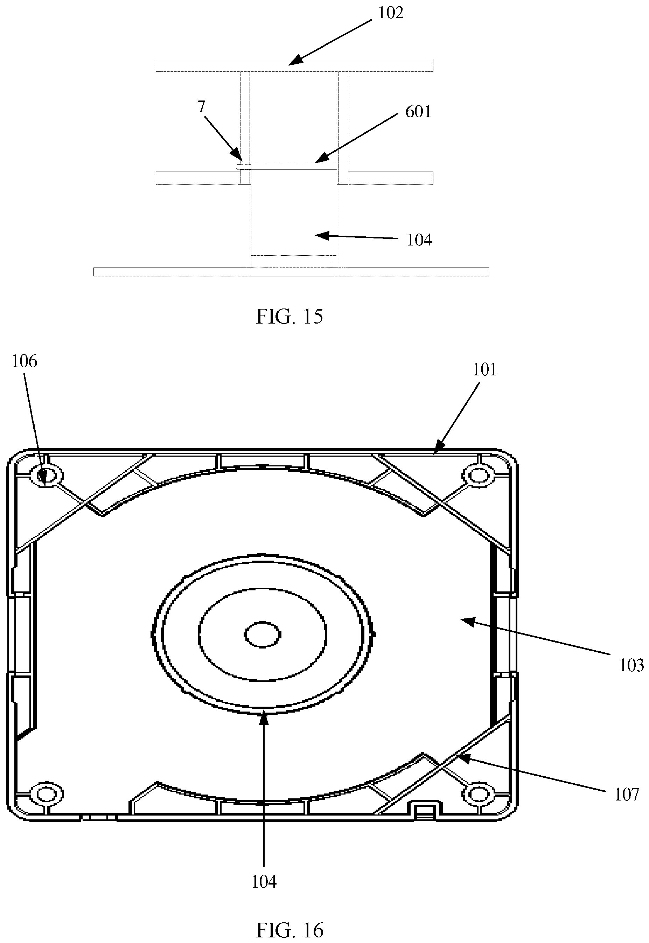

Embodiment 2: Refer to FIG. 14. One end that is of the stationary shaft 104 and that is close to the storage cavity opening is provided with a first conduit 601. The first conduit 601 is disposed along the circumferential direction of the stationary shaft 104. Refer to FIG. 15. When the rotary tray 102 slides to the second position, a connection pin 7 passing through a side face of the rotary tray is inserted into the first conduit 601. In other words, the rotary tray 102 is connected to the stationary shaft 104 by using the connection pin 7, to prevent the rotary tray 102 from being detached from the stationary shaft and moving toward a direction of the first position. In addition, the first conduit 601 is disposed along the circumferential direction of the stationary shaft. Therefore, rotation of the rotary tray is not affected on a basis that the rotary tray cannot slide toward the second position or be detached from the stationary shaft.

Embodiment 3: The rotary tray 102 is connected to the stationary shaft 104 by using a compression spring. One end of the compression spring is connected to the stationary shaft, and the other end is connected to the rotary tray 102. When the rotary tray is in the first position, the compression spring is in a compressed state. When the rotary tray is in the second position, the compression spring is in a free state. In other words, when the rotary tray is in the second position, the compression spring is used to pull the rotary tray, to prevent the rotary tray from being detached from the stationary shaft and moving to the first position. In the structure, elastic deformation of the compression spring is equal to a distance between the first position and the second position. This can ensure that the rotary tray moves between the first position and the second position.

Compared with Embodiment 2 and Embodiment 3, Embodiment 1 has a simpler structure and is easier to implement. In addition, the stop block is disposed between the rotary tray and the stationary shaft. In other words, the stop block is hidden inside the cable take-up and pay-off structure, and is not exposed. Therefore, an appearance of the cable take-up and pay-off structure is improved. Therefore, the stop block in Embodiment 1 is preferably used in this application.

When the base is detachably connected to the fiber access terminal by using the connection structure, if the connection structure is in an open state, the fiber access terminal is separated from the base, and the rotary tray and the fiber access terminal may slide to the second position, along the stationary shaft.

In order to ensure that the rotary tray and the fiber access terminal slide to the second position as required, the cable take-up and pay-off structure further includes a locking member. The locking member can switch between a locked state and an unlocked state. When the locking member is in the locked state, the rotary tray located in the first position can be prevented from moving toward the second position. When the locking member is in the unlocked state, the rotary tray located in the first position can be allowed to move toward the second position.

The locking member has a plurality of implementable structures. The following provides explanations by using two embodiments.

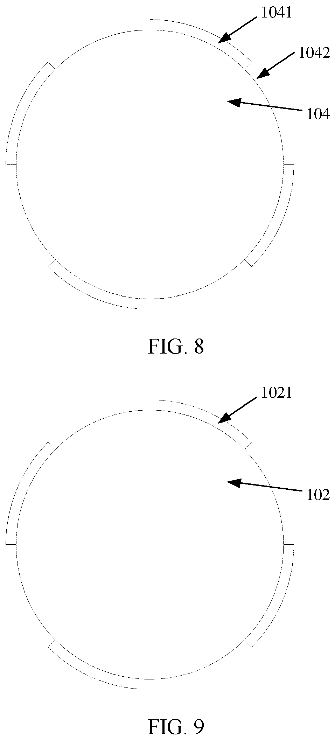

Embodiment 1: Refer to FIG. 7 and FIG. 8. A second boss is disposed on an outer wall surface of the stationary shaft 104 and is close to one end of the storage cavity opening. The second boss is disposed at intervals along the circumferential direction of the stationary shaft. A groove 1042 is formed between every two adjacent second bosses. Refer to FIG. 7 and FIG. 9. A convex rib 1021 is disposed on the wall surface of the jack of the rotary tray 102. The convex rib 1021 is arranged at intervals along the circumferential direction of the rotary tray 102. When the convex rib 1021 presses against the second boss, the locking member is in the locked state, to prevent the rotary tray from sliding along an axial direction of the stationary shaft, toward the second position. When the convex rib 1021 is opposite to the groove, the locking member is in the unlocked state, and the rotary tray can slide along the axial direction of the stationary shaft, toward the second position.

The second boss arranged at intervals along the circumferential direction of the stationary shaft and the convex rib arranged at intervals along the circumferential direction of the rotary tray prevent the rotary tray from sliding from the first position to the second position, and further enable the rotary tray to rotate along the circumferential direction of the stationary shaft. The second boss and the convex rib are used as the locking member. The locking member has a simple structure and is easy to manufacture.

During specific implementation, when the locking member needs to be in the locked state, the rotary tray rotates, so that the convex rib 1021 is pressed against the second boss. When the rotary tray needs to be moved along the stationary shaft, the rotary tray rotates, so that the convex rib is opposite to the groove.

Embodiment 2: Refer to FIG. 14. One end that is of the stationary shaft 104 and that is close to the bottom of the storage cavity is provided with a second conduit 602. The second conduit 602 is disposed along the circumferential direction of the stationary shaft. When the rotary tray 102 slides to the first position, a connection pin 7 passing through a side face of the rotary tray is inserted into the second conduit 602. In other words, when the rotary tray 102 is connected to the stationary shaft 104 by using the connection pin 7, the locking member is in the locked state. When the connection pin 7 is removed from the second conduit 602, the locking member is in the unlocked state. In this way, the rotary tray may move toward the second position along the stationary shaft.

When the locking member in Embodiment 2 is used, because the rotary tray in the first position is located in the storage cavity, it is inconvenient to insert or remove the connection pin 7. Therefore, the locking member in Embodiment 1 is preferably used in this application.

In addition, the locking member in Embodiment 1 may further be used to achieve the following technical effect: To improve an appearance of the entire optical cable fiber distribution apparatus, an outer profile of the fiber access terminal is usually the same as an outer profile of the base (as shown in FIG. 1). In this way, the fiber access terminal 2 covers a mounting hole 106 disposed on the base 101 (as shown in FIG. 16). When the cable take-up and pay-off structure needs to be installed on a wall by using a connector passing through the mounting hole 106, the rotary tray and the fiber access terminal are first rotated relative to the base. In this way, the mounting hole is exposed, and the optical cable fiber distribution device can be installed on the wall. Therefore, the locking member of the structure improves the appearance of the entire optical cable fiber distribution apparatus and implements locking and unlocking functions.

In Embodiment 1 with the stop block, the first boss 1041 is disposed on the outer wall surface of the stationary shaft 104, and the first boss 1041 is close to one end of the storage cavity opening. In Embodiment 1 with the locking member, the second boss is disposed on the outer wall surface of the stationary shaft 104, and the second boss is close to one end of the storage cavity opening. To simplify the structure, the first boss and the second boss may be one boss, and the boss is disposed at intervals along the circumferential direction of the stationary shaft. In this way, when the boss collaborates with the extension part, the boss and the extension part can limit the rotary tray. When the boss collaborates with the convex rib, the boss locks the convex rib.

To achieve that the rotary tray 102 can still rotate relative to the stationary shaft 104 when the rotary tray 102 is in the second position, refer to FIG. 12 and FIG. 13. The convex rib 1021 extends to one end that is of the rotary stay 102 and that is close to the bottom of the base 101. The end that is of the convex rib 1021 and that is close to the bottom of the base is provided with an avoidance groove 1023 for the second boss to pass through. The avoidance groove 1023 is disposed along the circumferential direction of the rotary tray 102. Refer to FIG. 13, the convex rib that rotates with the rotary tray is not interfered with by the second boss 1041. The convex rib 1021 is provided with the avoidance groove 1023. When the rotary tray rotates, the second boss can pass through the avoidance groove. In this way, the rotary tray can rotate.

There are a plurality of structures for the rotary stay. For example, refer to FIG. 11. The rotary stay includes a first baffle plate 801 and a second baffle plate 802 that are opposite to each other. The first baffle plate 801 is connected to the second baffle plate 802 by using a connection column 803. A jack is provided on the connection column 803. The connection column 803 is sleeved outside the stationary shaft through the jack. The connection column 803 can rotate relative to the stationary shaft and can slide along the axial direction of the stationary shaft. For another example, the rotary tray includes a rotary column, and the rotary column rotates and is sleeved outside the stationary shaft and can slide along the axial direction of the stationary axis.

Compared with that in Embodiment 2, in Embodiment 1 with the rotary tray, the optical cable is wound around the outside of the connection column. The first baffle plate and the second baffle plate can limit a position of the optical cable, to prevent the optical cable from moving along an axial direction of the connection column. Therefore, the rotary tray of the structure in Embodiment 1 is preferably used in this application. Certainly, the rotary tray may alternatively be another structure, and the rotary tray any structure falls within the protection scope of this application.

During specific implementation, the fiber access terminal is relatively fixed to the rotary tray. In other words, the fiber access terminal and the base may rotate synchronously. Therefore, the cable port may face a required direction according to a use requirement. Likewise, a plug-in end of the fiber access terminal may also face the required direction.

To increase strength of the base 101, refer to FIG. 16. Reinforcing ribs 107 are disposed on the circumferential direction of the base 101. In other words, the strength of the base is increased by using the reinforcing ribs 107 disposed around the base. In addition, refer to FIG. 10. If the rotary tray needs to be rotated by α, relative to the stationary shaft, the rotary tray can slide along the axis of the stationary shaft. A connection line between a first end of the reinforcing rib 107 and an axle centre of the stationary shaft is a first straight line. A connection line between a second end of the reinforcing rib 107 and the axle centre of the stationary shaft is a second straight line (the first end is opposite to the second end). An included angle between the first straight line and the second straight line is α. In this way, the reinforcing rib 107 may be used as an indication line, so that the rotary tray rotates by α, relative to the stationary shaft. For example, if the rotary tray needs to be rotated by 45 degrees, relative to the stationary shaft, the rotary tray can slide along the axis of the stationary shaft. In this way, the included angle between the first straight line and the second straight line of the reinforcing rib may be 45 degrees.

To further improve construction efficiency, the optical cable fiber distribution apparatus further includes the optical cable. The optical cable is wound around the rotary tray. One end of the optical cable is connected to the plug-in end of the fiber access terminal, to transmit an optical signal on the optical cable to the fiber access terminal. Because the optical cable fiber distribution apparatus further includes the optical cable wound around the rotary tray, to integrate one component of the optical cable, the fiber access terminal, and the cable take-up and pay-off structure. Therefore, the construction efficiency is further improved.

When the optical cable is pulled out, to avoid a case in which one end that is of the optical cable and that is plugged in the fiber access terminal is twisted, and interferes with another structure is avoided, a guide structure is disposed on the fiber access terminal. The guide structure is configured to guide the optical cable to plug in the plug-in end of the fiber access terminal. In this way, when the optical cable is pulled out, the end that is of the optical cable and that is plugged in the fiber access terminal is not affected, to ensure plug-in performance of the optical cable and the fiber access terminal.

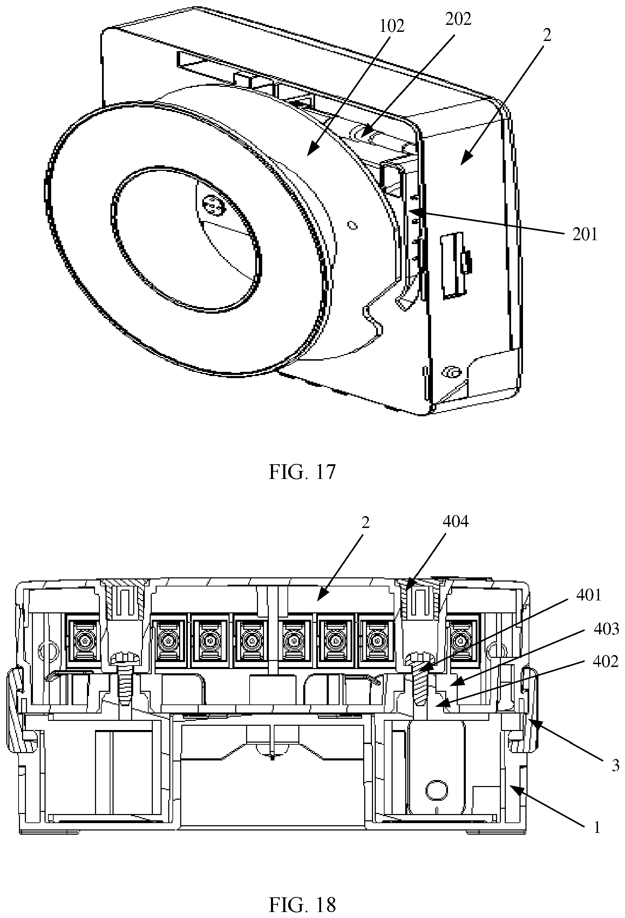

Refer to FIG. 17. A baffle plate 201 is disposed on the fiber access terminal 2. A conduit is formed between the baffle plate 201 and a side wall of the fiber access terminal 2. The conduit is a guide structure. The optical cable is deployed along the conduit and is plugged in the plug-in end 202.

To further improve connection strength between the optical cable and the plug-in end 202 of the fiber access terminal, the optical cable deployed in the conduit is fixedly connected to the baffle plate through a clamp. In this way, when the other end of the optical cable is pulled out, connectivity between the optical cable and the plug-in end is further prevented from being affected. A guide structure formed by the structure is simple and easy to implement.

During specific implementation, the fiber access terminal is relatively fixed to the rotary tray. There are a plurality of implementable structures in which the fiber access terminal is fixedly connected to the rotary tray. For example, the fiber access terminal is connected to the rotary tray by using a fixture. For another example, refer to FIG. 18. A mounting column 402 is disposed on a side that is of the rotary tray 102 and that faces the fiber access terminal 2. The fiber access terminal has an insertion hole 403. The mounting column 402 extends into the insertion hole 403. A connector 401 located in the insertion hole 403 is connected to the mounting column 402.

The insertion hole 403 disposed on the fiber access terminal penetrates an upper surface and a lower surface of the fiber access terminal 2. Therefore, to prevent dust from entering inside of the fiber access terminal 2 through the insertion hole 403, a nozzle cap 404 is disposed in the insertion hole 403 on the upper surface of the fiber access terminal 2, refer to FIG. 18. In other words, the nozzle cap 404 is used to prevent the dust from entering the fiber access terminal through the insertion hole 403.

In the descriptions of this specification, the described specific features, structures, materials, or characteristics may be combined in a proper manner in any one or more of the embodiments or examples.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An optical cable fiber distribution apparatus, comprising: a fiber access terminal (2), a cable take-up and pay-off structure (1), and a connection structure (3), wherein the cable take-up and pay-off structure (1) is configured to take up and pay-off an optical cable connected to the fiber access terminal (2);
the cable take-up and pay-off structure (1) comprises:
a base (101) with a storage cavity (103), wherein the storage cavity (103) integrates with a surface of the base (101) to form a storage cavity opening, and the base (101) is disposed with a cable port (105) connected to the storage cavity (103); and
a rotary tray (102), configured to coil the optical cable, wherein the rotary tray (102) is installed in the storage cavity (103), the fiber access terminal (2) is disposed on a side of the storage cavity opening, the rotary tray (102) is relatively fixed to the fiber access terminal (2), and the rotary tray (102) and the fiber access terminal (2) can rotate synchronously relative to the base (101); **characterized in that**
the connection structure (3) comprises:
a first connector (302), disposed on the fiber access terminal (2); and
a second connector (301), disposed on the base (101) and detachably connected to the first connector (302), wherein
the rotary tray (102) and the fiber access terminal (2) can synchronously move relative to the base (101), between a first position and a second position, moving directions of the rotary tray (102) and the fiber access terminal (2) are consistent with a direction of a rotation axis of the rotary tray (102), when the rotary tray (102) and the fiber access terminal (2) move to the first position, the rotary tray (102) is located in the storage cavity (103), and when the rotary tray (102) and the fiber access terminal (2) move to the second position, the rotary tray (102) is located outside the storage cavity (103).

2. The optical cable fiber distribution apparatus according to claim 1, wherein one of the first connector (302) and the second connector (301) is a card fastener, and the other is a card slot.

3. The optical cable fiber distribution apparatus according to claim 1 or 2, wherein a stationary shaft (104) is disposed in the storage cavity (103), the stationary shaft (104) is relatively fixed to the base (101), an axis of the stationary shaft (104) is collinear with the rotation axis of the rotary tray (102), the rotary tray (102) has a jack, the rotary tray (102) is sleeved outside the stationary shaft (104) through the jack, and the rotary tray (102) and the fiber access terminal (2) can rotate around the axis of the stationary shaft (104), and can slide along the axis of the stationary shaft (104), between the first position and the second position;
when the rotary tray (102) and the fiber access terminal (2) slide to the first position, the rotary tray (102) presses against a bottom of the storage cavity (103); and
the cable take-up and pay-off structure (1) further comprises:
a stop block, wherein the stop block is configured to: when the rotary tray (102) and the fiber access terminal (2) slide to the second position, prevent the rotary tray (102) from being detached from the stationary shaft (104) and prevent the rotary tray (102) from moving in a direction close to the first position.

4. The optical cable fiber distribution apparatus according to claim 3, wherein the stop block comprises:
a first boss (1041), wherein the first boss (1041) is disposed on an outer wall surface of the stationary shaft (104) and is close to one end of the storage cavity opening, and the first boss (1041) is disposed along a circumferential direction of the stationary shaft (104); and
an extension part (1022) that is extending in a direction of the stationary shaft (104) and that is disposed on a wall surface of the jack, wherein the extension part (1022) is disposed along a circumferential direction of the rotary tray (102), the extension part (1022) is elastic, the extension part (1022) is close to the bottom of the storage cavity (103), and the extension part (1022) is disposed with a card slot for clamping the first boss (1041), a notch of the card slot faces the stationary shaft (104); and
when the first boss (1041) is clamped into the card slot, the rotary tray (102) can be prevented from being detached from the stationary shaft (104) and the rotary tray (102) can be prevented from moving in the direction close to the first position.

5. The optical cable fiber distribution apparatus according to claim 3 or 4, wherein the cable take-up and pay-off structure (1) further comprises:
a locking member, wherein the locking member can switch between a locked state and an unlocked state; and
when the locking member is in the locked state, the rotary tray (102) and the fiber access terminal (2) that are located in the first position can be prevented from moving toward the second position, and when the locking member is in the unlocked state, the rotary tray (102) and the fiber access terminal (2) that are located in the first position can be allowed to move toward the second position.

6. The optical cable fiber distribution apparatus according to claim 5, wherein the locking member comprises:
a second boss, wherein the second boss is disposed on an outer wall surface of the stationary shaft (104) and is close to one end of the storage cavity opening, the second boss is disposed at intervals, along the circumferential direction of the stationary shaft (104), and a groove (1042) is formed between every two adjacent second bosses; and
a convex rib (1021), wherein the convex rib (1021) is disposed on the wall surface of the jack, and the convex rib (1021) is arranged at intervals, along the circumferential direction of the rotary tray (102);
when the convex rib (1021) presses against the second boss, the locking member is in the locked state, to prevent the rotary tray (102) from sliding along an axial direction of the stationary shaft (104), toward the second position; and
when the convex rib (1021) is opposite to the groove (1042), the locking member is in the unlocked state, and the rotary tray (102) can slide along the axial direction of the stationary shaft (104), toward the second position.

7. The optical cable fiber distribution apparatus according to claim 6, wherein the convex rib (1021) extends to one end that is of the rotary tray (102) and that is close to the bottom of the storage cavity (103), one end that is of the convex rib (1021) and that is close to the bottom of the storage cavity (103) has an avoidance groove (1023) for the second boss to pass through, and the avoidance groove (1023) is disposed along the circumferential direction of the rotary tray (102).

8. The optical cable fiber distribution apparatus according to any one of claims 3 to 7, wherein the rotary tray (102) comprises a first baffle plate (801) and a second baffle plate (802) that are opposite to each other, the first baffle plate (801) is connected to the second baffle plate (802) by using a connection column (803), the jack is disposed on the connection column (803), the connection column (803) is sleeved outside the stationary shaft (104) through the jack, the connection column (803) can rotate around the axis of the stationary shaft (104), and the connection column (803) can slide along the axial direction of the stationary shaft (104).

9. The optical cable fiber distribution apparatus according to any one of claims 1 to 8, wherein optical cable fiber distribution apparatus further comprises:
the optical cable, wherein the optical cable is wound around the rotary tray (102), one end of the optical cable is connected to a plug-in end (202) of the fiber access terminal (2) to transmit an optical signal on the optical cable to the fiber access terminal (2), and the other end of the optical cable can pass through the cable port (105).

10. The optical cable fiber distribution apparatus according to any one of claims 1 to 9, wherein the fiber access terminal (2) is disposed with a guide structure, and the guide structure is configured to guide the optical cable to connect to the plug-in end (202) of the fiber access terminal (2).

## Patentansprüche

1. Faserverteilungsvorrichtung für optische Kabel, die Folgendes umfasst: einen Faserzugangsanschluss (2), eine Kabelaufnahme- und Kabelabgabestruktur (1) und eine Verbindungsstruktur (3), wobei die Kabelaufnahme- und Kabelabgabestruktur (1) konfiguriert ist, ein optisches Kabel, das mit dem Faserzugangsanschluss (2) verbunden ist, aufzunehmen und abzugeben;
wobei die Kabelaufnahme- und Kabelabgabestruktur (1) Folgendes umfasst:
eine Basis (101) mit einem Lagerhohlraum (103), wobei der Lagerhohlraum (103) in eine Fläche der Basis (101) integriert ist, um eine Lagerhohlraumöffnung zu bilden, und die Basis (101) mit einem Kabel-Port (105) versehen ist, der mit dem Lagerhohlraum (103) verbunden ist; und
einen Drehteller (102), der konfiguriert ist, das optische Kabel aufzuwickeln, wobei der Drehteller (102) in dem Lagerhohlraum (103) installiert ist, der Faserzugangsanschluss (2) auf einer Seite der Lagerhohlraumöffnung angeordnet ist, der Drehteller (102) an dem Faserzugangsanschluss (2) relativ befestigt ist und der Drehteller (102) und der Faserzugangsanschluss (2) sich relativ zu der Basis (101) synchron drehen können; **dadurch gekennzeichnet, dass**
die Verbindungsstruktur (3) Folgendes umfasst:
ein erstes Verbindungselement (302), das an dem Faserzugangsanschluss (2) angeordnet ist; und
ein zweites Verbindungselement (301), das auf der Basis (101) angeordnet ist und abnehmbar mit dem ersten Verbindungselement (302) verbunden ist,
wobei sich der Drehteller (102) und der Faserzugangsanschluss (2) relativ zu der Basis (101) zwischen einer ersten Position und einer zweiten Position synchron bewegen können, wobei Bewegungsrichtungen des Drehtellers (102) und des Faserzugangsanschlusses (2) mit der Richtung einer Drehachse des Drehtellers (102) konsistent sind, wobei dann, wenn sich der Drehteller (102) und der Faserzugangsanschluss (2) zu der ersten Position bewegen, sich der Drehteller (102) in dem Lagerhohlraum (103) befindet und dann, wenn sich der Drehteller (102) und der Faserzugangsanschluss (2) zu der zweiten Position bewegen, sich der Drehteller (102) außerhalb des Lagerhohlraums (103) befindet.

2. Faserverteilungsvorrichtung für optische Kabel nach Anspruch 1, wobei das erste Verbindungselement (302) oder das zweite Verbindungselement (301) eine Kartenhalterung ist und das andere ein Kartensteckplatz ist.

3. Faserverteilungsvorrichtung für optische Kabel nach Anspruch 1 oder 2, wobei eine stationäre Welle (104) in dem Lagerhohlraum (103) angeordnet ist, die stationäre Welle (104) an der Basis (101) relativ befestigt ist, eine Achse der stationären Welle (104) mit der Drehachse des Drehtellers (102) kollinear ist, der Drehteller (102) eine Buchse besitzt, der Drehteller (102) außerhalb der stationären Welle (104) durch die Buchse hindurchgeführt wird und der Drehteller (102) und der Faserzugangsanschluss (2) sich um die Achse der stationären Welle (104) drehen können und entlang der Achse der stationären Welle (104) zwischen der ersten Position und der zweiten Position gleiten können;
wobei dann, wenn der Drehteller (102) und der Faserzugangsanschluss (2) zu der ersten Position gleiten, der Drehteller (102) gegen einen Boden des Lagerhohlraums (103) drückt; und
die Kabelaufnahme- und Kabelabgabestruktur (1) ferner Folgendes umfasst:
einen Stoppblock, wobei der Stoppblock konfiguriert ist, dann, wenn der Drehteller (102) und der Faserzugangsanschluss (2) zu der zweiten Position gleiten, zu verhindern, dass der Drehteller (102) von der stationären Welle (104) getrennt wird, und zu verhindern, dass sich der Drehteller (102) in einer Richtung in die Nähe der ersten Position bewegt.

4. Faserverteilungsvorrichtung für optische Kabel nach Anspruch 3, wobei der Stoppblock Folgendes umfasst:
eine erste Nabe (1041), wobei die erste Nabe (1041) auf einer äußeren Wandfläche der stationären Welle (104) angeordnet ist und sich in der Nähe eines Endes der Speicherhohlraumöffnung befindet und die erste Nabe (1041) entlang einer Umfangsrichtung der stationären Welle (104) angeordnet ist; und
einen Verlängerungsteil (1022), der sich in einer Richtung der stationären Welle (104) erstreckt und der auf einer Wandfläche der Buchse angeordnet ist, wobei der Verlängerungsteil (1022) entlang einer Umfangsrichtung des Drehtellers (102) angeordnet ist, der Verlängerungsteil (1022) elastisch ist, der Verlängerungsteil (1022) sich in der Nähe des Bodens des Lagerhohlraums (103) befindet und der Verlängerungsteil (1022) mit einem Kartensteckplatz zum Klemmen der ersten Nabe (1041) versehen ist, wobei eine Nut des Kartensteckplatzes der stationären Welle (104) zugewandt ist; und
dann, wenn die erste Nabe (1041) in den Kartensteckplatz geklemmt wird, verhindert werden kann, dass der Drehteller (102) von der stationären Welle (104) getrennt wird, und verhindert werden kann, dass sich der Drehteller (102) in der Richtung in die Nähe der ersten Position bewegt.

5. Faserverteilungsvorrichtung für optische Kabel nach Anspruch 3 oder 4, wobei die Kabelaufnahme- und Kabelabgabestruktur (1) ferner Folgendes umfasst:
ein Verriegelungselement, wobei das Verriegelungselement zwischen einem verriegelten Zustand und einem nicht verriegelten Zustand wechselt; und
dann, wenn das Verriegelungselement in dem verriegelten Zustand ist, verhindert werden kann, dass sich der Drehteller (102) und der Faserzugangsanschluss (2), die sich in der ersten Position befinden, in Richtung der zweiten Position bewegen und dann, wenn das Verriegelungselement in dem nicht verriegelten Zustand ist, dem Drehteller (102) und dem Faserzugangsanschluss (2), die sich in der ersten Position befinden, erlaubt werden kann, sich in Richtung der zweiten Position zu bewegen.

6. Faserverteilungsvorrichtung für optische Kabel nach Anspruch 5, wobei das Verriegelungselement Folgendes umfasst:
eine zweite Nabe, wobei die zweite Nabe auf einer äußeren Wandfläche der stationären Welle (104) angeordnet ist und in der Nähe eines Endes der Lagerhohlraumöffnung ist, wobei die zweite Nabe in Intervallen entlang der Umfangsrichtung der stationären Welle (104) angeordnet ist und eine Rille (1042) zwischen jeweils zwei benachbarten zweiten Naben gebildet ist; und
eine konvexe Rippe (1021), wobei die konvexe Rippe (1021) auf der Wandfläche der Buchse angeordnet ist und die konvexe Rippe (1021) in Intervallen entlang der Umfangsrichtung des Drehtellers (102) angeordnet ist;
wobei dann, wenn die konvexe Rippe (1021) gegen die zweite Nabe drückt, das Verriegelungselement in dem verriegelten Zustand ist, um zu verhindern, dass der Drehteller (102) entlang einer axialen Richtung der stationären Welle (104) in Richtung der zweiten Position gleitet; und
dann, wenn die konvexe Rippe (1021) der Rille (1042) gegenüberliegt, das Verriegelungselement in dem nicht verriegelten Zustand ist und der Drehteller (102) entlang der axialen Richtung der stationären Welle (104) in Richtung der zweiten Position gleiten kann.

7. Faserverteilungsvorrichtung für optische Kabel nach Anspruch 6, wobei sich die konvexe Rippe (1021) zu einem Ende des Drehtellers (102) erstreckt, das sich in der Nähe des Bodens des Lagerhohlraums (103) befindet, wobei ein Ende der konvexen Rippe (1021), das sich in der Nähe des Bodens des Lagerhohlraums (103) befindet, eine Ausweichrille (1023) besitzt, damit die zweite Nabe dort hindurchführt, und die Ausweichrille (1023) entlang der Umfangsrichtung des Drehtellers (102) angeordnet ist.

8. Faserverteilungsvorrichtung für optische Kabel nach einem der Ansprüche 3 bis 7, wobei der Drehteller (102) eine erste Ablenkplatte (801) und eine zweite Ablenkplatte (802) umfasst, die einander gegenüberliegen, wobei die erste Ablenkplatte (801) mit der zweiten Ablenkplatte (802) durch Verwenden einer Verbindungssäule (803) verbunden ist, wobei die Buchse auf der Verbindungssäule (803) angeordnet ist, die Verbindungssäule (803) außerhalb der stationären Welle (104) durch die Buchse hindurchgeführt wird, sich die Verbindungssäule (803) um die Achse der stationären Welle (104) drehen kann und die Verbindungssäule (803) entlang der axialen Richtung der stationären Welle (104) gleiten kann.

9. Faserverteilungsvorrichtung für optische Kabel nach einem der Ansprüche 1 bis 8, wobei die Faserverteilungsvorrichtung für optische Kabel ferner Folgendes umfasst:
das optische Kabel, wobei das optische Kabel um den Drehteller (102) gewickelt ist, ein Ende des optischen Kabels mit einem Einsteckende (202) des Faserzugangsanschlusses (2) verbunden ist, um ein optisches Signal auf dem optischen Kabel an den Faserzugangsanschluss (2) zu übertragen, und das andere Ende des optischen Kabels durch den Kabel-Port (105) hindurchführen kann.

10. Faserverteilungsvorrichtung für optische Kabel nach einem der Ansprüche 1 bis 9, wobei der Faserzugangsanschluss (2) mit einer Führungsstruktur versehen ist und die Führungsstruktur konfiguriert ist, das optische Kabel so zu leiten, dass es sich mit dem Einsteckende (202) des Faserzugangsanschlusses (2) verbindet.

## Revendications

1. Appareil de distribution de fibre pour câble optique, comprenant : un terminal d'accès à fibre (2), une structure d'envidage et de dévidage de câble (1), et une structure de raccordement (3), dans lequel la structure d'envidage et de dévidage de câble (1) est configurée pour envider et dévider un câble optique raccordé au terminal d'accès à fibre (2) ;
la structure d'envidage et de dévidage de câble (1) comprend :
une base (101) avec une cavité de stockage (103), dans lequel la cavité de stockage (103) s'intègre avec une surface de la base (101) pour former une ouverture de cavité de stockage, et la base (101) est pourvue d'un orifice de câble (105) raccordé à la cavité de stockage (103) ; et
un plateau rotatif (102), configuré pour bobiner le câble optique, dans lequel le plateau rotatif (102) est installé dans la cavité de stockage (103), le terminal d'accès à fibre (2) est disposé sur un côté de l'ouverture de cavité de stockage, le plateau rotatif (102) est relativement fixé au terminal d'accès à fibre (2), et le plateau rotatif (102) et le terminal d'accès à fibre (2) peuvent entrer en rotation de façon synchrone relativement à la base (101) ; **caractérisé en ce que**
la structure de raccordement (3) comprend :
un premier raccord (302), disposé sur le terminal d'accès à fibre (2) ; et
un second raccord (301), disposé sur la base (101) et raccordé de façon détachable au premier raccord (302), dans lequel
le plateau rotatif (102) et le terminal d'accès à fibre (2) peuvent se mouvoir de façon synchrone relativement à la base (101), entre une première position et une seconde position, des directions de mouvement du plateau rotatif (102) et du terminal d'accès à fibre (2) coïncident avec une direction d'un axe de rotation du plateau rotatif (102), lorsque le plateau rotatif (102) et le terminal d'accès à fibre (2) se meuvent jusqu'à la première position, le plateau rotatif (102) est situé dans la cavité de stockage (103), et, lorsque le plateau rotatif (102) et le terminal d'accès à fibre (2) se meuvent jusqu'à la seconde position, le plateau rotatif (102) est situé à l'extérieur de la cavité de stockage (103).

2. Appareil de distribution de fibre pour câble optique selon la revendication 1, dans lequel un du premier raccord (302) et du second raccord (301) est une pièce de fixation de carte, et l'autre est une fente pour carte.

3. Appareil de distribution de fibre pour câble optique selon la revendication 1 ou 2, dans lequel un arbre stationnaire (104) est disposé dans la cavité de stockage (103), l'arbre stationnaire (104) est relativement fixé à la base (101), un axe de l'arbre stationnaire (104) est colinéaire avec l'axe de rotation du plateau rotatif (102), le plateau rotatif (102) a une pièce d'insertion, le plateau rotatif (102) est emmanché à l'extérieur de l'arbre stationnaire (104) par le biais de la pièce d'insertion, et le plateau rotatif (102) et le terminal d'accès à fibre (2) peuvent entrer en rotation autour de l'axe de l'arbre stationnaire (104), et peuvent coulisser le long de l'axe de l'arbre stationnaire (104), entre la première position et la seconde position ;
lorsque le plateau rotatif (102) et le terminal d'accès à fibre (2) coulissent jusqu'à la première position, le plateau rotatif (102) appuie contre un fond de la cavité de stockage (103) ; et
la structure d'envidage et de dévidage de câble (1) comprend en outre :
un bloc d'arrêt, dans lequel le bloc d'arrêt est configuré pour : lorsque le plateau rotatif (102) et le terminal d'accès à fibre (2) coulissent jusqu'à la seconde position, empêcher le plateau rotatif (102) d'être détaché de l'arbre stationnaire (104) et empêcher le plateau rotatif (102) de se mouvoir dans une direction à proximité de la première position.

4. Appareil de distribution de fibre pour câble optique selon la revendication 3, dans lequel le bloc d'arrêt comprend :
un premier bossage (1041), dans lequel le premier bossage (1041) est disposé sur une surface de paroi extérieure de l'arbre stationnaire (104) et est à proximité d'une extrémité de l'ouverture de cavité de stockage, et le premier bossage (1041) est disposé le long d'une direction circonférentielle de l'arbre stationnaire (104) ; et
une partie d'extension (1022) qui s'étend dans une direction de l'arbre stationnaire (104) et qui est disposée sur une surface de paroi de la pièce d'insertion, dans lequel la partie d'extension (1022) est disposée le long d'une direction circonférentielle du plateau rotatif (102), la partie d'extension (1022) est élastique, la partie d'extension (1022) est à proximité du fond de la cavité de stockage (103), et la partie d'extension (1022) est pourvue d'une fente pour carte pour assujettir le premier bossage (1041), une entaille de la fente pour carte fait face à l'arbre stationnaire (104) ; et
lorsque le premier bossage (1041) est assujetti dans la fente pour carte, le plateau rotatif (102) peut être empêché d'être détaché de l'arbre stationnaire (104) et le plateau rotatif (102) peut être empêché de se mouvoir dans la direction à proximité de la première position.

5. Appareil de distribution de fibre pour câble optique selon la revendication 3 ou 4, dans lequel la structure d'envidage et de dévidage de câble (1) comprend en outre :
un élément de verrouillage, dans lequel l'élément de verrouillage peut permuter entre un état verrouillé et un état déverrouillé ; et
lorsque l'élément de verrouillage est dans l'état verrouillé, le plateau rotatif (102) et le terminal d'accès à fibre (2) qui sont situés dans la première position peut être empêchés de se mouvoir vers la seconde position, et, lorsque l'élément de verrouillage est dans l'état déverrouillé, le plateau rotatif (102) et le terminal d'accès à fibre (2) qui sont situés dans la première position peuvent être permis de se mouvoir vers la seconde position.

6. Appareil de distribution de fibre pour câble optique selon la revendication 5, dans lequel l'élément de verrouillage comprend :
un second bossage, dans lequel le second bossage est disposé sur une surface de paroi extérieure de l'arbre stationnaire (104) et est à proximité d'une extrémité de l'ouverture de cavité de stockage, le second bossage est disposé à des intervalles, le long de la direction circonférentielle de l'arbre stationnaire (104), et une rainure (1042) est formée entre chaque paire de bossages adjacents ; et
une nervure convexe (1021), dans lequel la nervure convexe (1021) est disposée sur la surface de paroi de la pièce d'insertion, et la nervure convexe (1021) est agencée à des intervalles, le long de la direction circonférentielle du plateau rotatif (102) ;
lorsque la nervure convexe (1021) appuie contre le second bossage, l'élément de verrouillage est dans l'état verrouillé, pour empêcher le plateau rotatif (102) de coulisser le long d'une direction axiale de l'arbre stationnaire (104), vers la seconde position ; et
lorsque la nervure convexe (1021) est opposée à la rainure (1042), l'élément de verrouillage est dans l'état déverrouillé, et le plateau rotatif (102) peut coulisser le long de la direction axiale de l'arbre stationnaire (104), vers la seconde position.

7. Appareil de distribution de fibre pour câble optique selon la revendication 6, dans lequel la nervure convexe (1021) s'étend jusqu'à une extrémité qui est du plateau rotatif (102) et qui est à proximité du fond de la cavité de stockage (103), une extrémité qui est de la nervure convexe (1021) et qui est à proximité du fond de la cavité de stockage (103) a une rainure d'évitement (1023) pour que le second bossage passe à travers, et la rainure d'évitement (1023) est disposée le long de la direction circonférentielle du plateau rotatif (102).

8. Appareil de distribution de fibre pour câble optique selon l'une quelconque des revendications 3 à 7, dans lequel le plateau rotatif (102) comprend une première plaque-flasque (801) et une seconde plaque-flasque (802) qui sont opposées l'une à l'autre, la première plaque-flasque (801) est raccordée à la seconde plaque-flasque (802) en utilisant une colonne de raccordement (803), la pièce d'insertion est disposée sur la colonne de raccordement (803), la colonne de raccordement (803) est emmanchée à l'extérieur de l'arbre stationnaire (104) par le biais de la pièce d'insertion, la colonne de raccordement (803) peut entrer en rotation autour de l'axe de l'arbre stationnaire (104), et la colonne de raccordement (803) peut coulisser le long de la direction axiale de l'arbre stationnaire (104).

9. Appareil de distribution de fibre pour câble optique selon l'une quelconque des revendications 1 à 8, dans lequel l'appareil de distribution de fibre pour câble optique comprend en outre :
le câble optique, dans lequel le câble optique est enroulé autour du plateau rotatif (102), une extrémité du câble optique est raccordée à une extrémité d'enfichage (202) du terminal d'accès à fibre (2) pour transmettre un signal optique sur le câble optique au terminal d'accès à fibre (2), et l'autre extrémité du câble optique peut passer à travers l'orifice de câble (105).

10. Appareil de distribution de fibre pour câble optique selon l'une quelconque des revendications 1 à 9, dans lequel le terminal d'accès à fibre (2) est pourvu d'une structure de guidage, et la structure de guidage est configurée pour guider le câble optique pour se raccorder à l'extrémité d'enfichage (202) du terminal d'accès à fibre (2).
